# EUROPÄISCHE PATENTSCHRIFT

(11) **EP 3 084 516 B1**
(45) Veröffentlichungstag und Bekanntmachung des Hinweises auf die Patenterteilung: **11.10.2017**
(21) Anmeldenummer: 14814821.6
(22) Anmeldetag: 12.12.2014
(51) Int. Cl.: G02F 1/1333

(54) **VERFAHREN ZUR HERSTELLUNG EINER ANZEIGEEINHEIT SOWIE ANZEIGEEINHEIT**
PROCESS FOR PRODUCING A DISPLAY UNIT AND DISPLAY UNIT
PROCÉDÉ DE FABRICATION D'UNE UNITÉ D'AFFICHAGE ET UNITÉ D'AFFICHAGE

(30) Priorität: 18.12.2013 DE 102013226547
(43) Veröffentlichungstag der Anmeldung: 26.10.2016
(73) Patentinhaber: Continental Automotive GmbH, 30165 Hannover (DE)
(72) Erfinder: WEDEL, Hans, 64367 Mühltal (DE); ESSER, Edwin, 63128 Dietzenbach (DE); HERMANN, Ulrich Georg, 64832 Babenhausen (DE); URLAUB, Günter, 64850 Schaafheim (DE); LEUPERT, Ralf, 65719 Hofheim (DE)
(86) Internationale Anmeldenummer: PCT/EP2014/077655
(87) Internationale Veröffentlichungsnummer: WO 2015/091296

(56) Entgegenhaltungen:
- EP-A1- 2 144 218
- CN-B- 101 785 041
- US-A1- 2008 230 177
- US-A1- 2009 288 756
- US-A1- 2010 073 595

## Beschreibung

Die Erfindung bezieht sich auf ein Verfahren zur Herstellung einer Anzeigeeinheit sowie auf eine Anzeigeeinheit, die eine einen flächigen aktiv ansteuerbaren Bereich besitzende elektrooptische Anzeige mit einem beobachterseitig davor angeordneten Deckglas aufweist, wobei zwischen der elektrooptischen Anzeige und dem Deckglas eine Schicht transparenter Bondingmasse angeordnet ist und wobei das Deckglas durch Klebverbindungen mittels eines Bondingrahmens mit der elektrooptischen Anzeige zu einer Baueinheit verbunden ist, die in eine Ausnehmung einer Anzeigenblende derart eingesetzt ist, dass die beobachterseitigen Flächen von Deckglas und Anzeigenblende in einer Ebene liegen.

Bei derartigen Anzeigeeinheiten ist es zur Vermeidung optischer Beeinträchtigungen der Darstellungen der Anzeigeeinheit erforderlich, dass der flächige aktiv ansteuerbare Bereich und das Deckglas mit definiertem Abstand zueinander angeordnet sind. Außerdem muss der zwischen der elektrooptischen Anzeige und dem Deckglas gebildete und mit der Bondingmasse gefüllte Spalt auf ein bestimmtes Maß exakt eingehalten sein, um das Volumen der Bondingmasse definiert einstellen zu können. Dazu ist es bekannt, diesen Spalt durch Spacer zwischen Deckglas und dem frontseitigen Displayglas der elektrooptischen Anzeige zu bestimmen, was aber zu einem aufwendigen Aufbau führt und störend in dem von einem Beobachter zu sehenden Bereich ist. Solche oder ähnliche Anzeigeeinheiten und Verfahren zu deren Herstellung sind in den Dokumenten US 2009/0288756 A1, US 2008/0230177 A1, US 2010/0073595 A1, CN 101785041 A, EP 2144218A1 beschrieben.

Aufgabe der Erfindung ist es daher, ein Verfahren zur Herstellung einer Anzeigeeinheit sowie eine Anzeigeeinheit der eingangs genannten Art zu schaffen, die optische Beeinträchtigungen vermeidend einfach aufgebaut und einfach herstellbar sowie leicht an der Anzeigeblende montierbar ist.

Diese Aufgabe wird erfindungsgemäß mittels eines Verfahrens zur Herstellung einer Anzeigeeinheit dadurch gelöst,
dass das Deckglas in eine erste Aufnahme einer Positioniervorrichtung bis zur Auflage an einer zur Ebene des Deckglases parallelen ersten Auflagefläche eingelegt wird,
dass danach der Bondingrahmen in eine zweite Aufnahme der Positioniervorrichtung bis zur Auflage an einer zur Ebene der ersten Auflagefläche parallelen zweiten Auflagefläche eingelegt wird, wobei der Abstand der Ebenen der ersten und zweiten Auflagefläche zueinander der Dicke der Anzeigeblende in deren die Ausnehmung umschließenden Bereich entspricht,
dass der Bondingrahmen einen zum Deckglas parallelen Schenkel aufweist, dessen zum Deckglas gerichteter umlaufender Rand den umlaufenden Rand des Deckglases mit einem eine Nut bildenden Abstand umschließt, wobei der Schenkel auf seiner der Beobachterseite abgewandten Seite eine zur Ebene des Deckglases parallele dritte Auflagefläche aufweist, deren Ebene sich in einem bestimmten Abstand parallel zu der beobachterabgewandten Fläche des Deckglases erstreckt,
dass danach die Nut zwischen Deckglas und Schenkel des Bondingrahmens mit einem diese beiden Teile miteinander verbindenden ersten Kleber gefüllt wird,
dass danach die beobachterabgewandte Fläche des Deckglases mit der Schicht transparenter Bondingmasse bedeckt wird, die sich bis zu der dem Deckglas zugewandten Stirnseite des Schenkels erstreckt und deren beobachterabgewandte Seite einer Ebene mit der dritten Auflagefläche des Schenkels bildet, dass danach die elektrooptische Anzeige mit ihrer Beobachterseite auf die Bondingmasse aufgelegt wird, so dass die elektrooptische Anzeige mit ihrem radial umlaufenden, sich über das Deckglas hinaus erstreckenden Randbereich auf der dritte Auflagefläche des Schenkels in Auflage ist,
dass danach ein zweiter Kleber direkt oder indirekt die elektrooptische Anzeige mit dem Bondingrahmen verbindend zwischen den umlaufenden Randbereich der elektrooptischen Anzeige und den Bondingrahmen eingebracht wird und
dass danach die aus Deckglas, elektrooptischer Anzeige und Bondingrahmen bestehende Baueinheit von der einem Beobachter abgewandten Seite her bis zur Anlage des Bondingrahmens an der Anzeigenblende gebracht und mit diesem verbunden wird, wobei das Deckglas in die Ausnehmung der Anzeigenblende eingetaucht ist.

Die elektrooptische Anzeige ist vorzugsweise eine Flüssigkristallanzeige oder OLED-Anzeige.

Es versteht sich, dass die elektrooptische Anzeige nicht nur eine Plane, sondern auch eine gewölbte oder bombierte Form haben kann, wobei die Auflageflächen der Positioniervorrichtung entsprechend gewölbt oder bombiert ausgebildet sind.

Durch dieses Herstellungsverfahren wird zur Vorbereitung des Einbringens der Bondingmasse zwischen dem Bondingrahmen und dem Deckglas durch exaktes Positionieren zueinander in der Positioniervorrichtung und anschließendes Verkleben ein volumendefinierter und paralleler Aufnahmespalt erzeugt, in den dann das entsprechend definierte Volumen an Bondingmasse eingebracht werden kann. Störende Abstandshalter sind nicht mehr erforderlich.

Durch den ersten Kleber ist die Nut zwischen Deckglas und Bondingrahmen flüssigkeitsdicht verschlossen.

Vorzugsweise weist die Positioniervorrichtung zumindest an ihren von den Bauteilen der Anzeigeeinheit beaufschlagten Flächen eine Antihaftbeschichtung auf, so dass auch zwischen dem Kleber und der Positioniervorrichtung keine Haftung entsteht.

Auf der einem Beobachter abgewandten Seite der elektrooptische Anzeige kann eine eine Ansteuerelektronik und/oder eine Beleuchtungseinheit aufweisende Einheit angeordnet sein, wobei der zweite Kleber die mit der elektrooptischen Anzeige fest verbundene Einheit mit dem Bondingrahmen verbindend zwischen den umlaufenden Randbereich der Einheit und den Bondingrahmen eingebracht werden kann.

Die Aufgabe wird erfindungsgemäß bei einer Anzeigeeinheit dadurch gelöst, dass zwischen der einem Beobachter abgewandten Seite des Deckglases und einer Frontseite der elektrooptischen Anzeige ein von der transparenten Bondingmasse gefüllter Spalt vorhanden ist, wobei ein sich über die Ebene des Deckglases hinaus erstreckender Bereich der elektrooptischen Anzeige mit seiner Frontseite an einer dritten Auflagefläche eines zum Deckglas parallelen Schenkels eines Bondingrahmens in Auflage ist, wobei die dritte Auflagefläche die beobachterferne Seite des Schenkels ist und die beobachterseitige Seite des Schenkels sich in einem Abstand parallel zur Frontseite des Deckglases erstreckt, der der Dicke der Anzeigeblende in deren die Ausnehmung umschließenden Bereich entspricht, mit einem eine Nut bildenden Abstand zwischen den einander gegenüberliegenden radial umlaufenden Seiten von Schenkel und Deckglas, in die ein das Deckglas und den Bondingrahmen verbindender erster Kleber eingebracht ist, mit einem zweiten Kleber, der zwischen dem radial umlaufenden Rand der elektrooptischen Anzeige oder dem radial umlaufenden Rand einer mit der elektrooptische Anzeige fest verbundenen Einheit und einem die elektrooptische Anzeige oder die damit fest verbundene Einheit umschießenden Bereich des Bondingrahmens eingebracht ist.

Durch diese Ausbildung werden die gleichen Vorteile und Eigenschaften wie bei einer nach vorbeschriebenem Verfahren hergestellten Anzeigeeinheit erreicht.

Zu einer leicht montierbaren, kompakten Anzeigeeinrichtung geringen Gewichts führt es, wenn der Bondingrahmen einen L-förmigen Querschnitt aufweist, dessen parallel zum Deckglas gerichteter erster Abschnitt den Schenkel des Bondingrahmens bildet und dessen zweiter Abschnitt von der Anzeigeblende weggerichtet ist, wobei der zweite Kleber zwischen dem radial umlaufenden Rand der elektrooptischen Anzeige oder dem radial umlaufenden Rand einer mit der elektrooptischen Anzeige fest verbundenen Einheit und dem zweiten Abschnitt des L-förmigen Bondingrahmens eingebracht ist.

Es versteht sich, dass der Bondingrahmen auch jeden anderen geeigneten Querschnitt aufweisen kann.

Weist die Bondingmasse einen Brechungsindex auf, der den Brechungsindizes des Deckglases und dem frontseitigen Substrat der elektrooptischen Anzeige zumindest annähernd entspricht, so wird das durch das Deckglas, die Bondingmasse und das Frontglas der elektrooptischen Anzeige hindurchtretende Licht an den Grenzflächen dieser Teile nicht gebrochen und nicht reflektiert.

Eine Lichtreflexion des auf das Deckglas auftreffenden Lichts wird vermieden, wenn das Deckglas aus einem geringreflektiven Material besteht und frontseitig eine antiglare-antireflective Beschichtung aufweist.

Zur Ansteuerung des aktiv ansteuerbaren Bereichs sowie zur Beleuchtung der elektrooptischen Anzeige kann die Einheit eine Ansteuerelektronik und/oder eine Beleuchtungseinheit aufweisen, die auf der einem Beobachter abgewandten Seite der elektrooptischen Anzeige angeordnet ist, wobei zum Schutz der Ansteuerelektronik und der Beleuchtungseinheit sowie zur Bildung eines Lichtkastens die Einheit ein Gehäuse aufweisen kann.

Erstreckt sich der aktiv ansteuerbare Bereich der elektrooptischen Anzeige über einen Flächenbereich, der ≤ der Flächenerstreckung des Deckglases ist, so wird im Verhältnis zur Frontfläche der Anzeigeeinheit eine große Fläche des ansteuerbaren Bereichs und somit eine zur Darstellung von Informationen große Fläche ermöglicht.

Ein Ausführungsbeispiel der Erfindung ist in der Zeichnung dargestellt und wird im Folgenden näher beschrieben.

Es zeigen:
- Figur 1: einen Ausschnitt einer Positioniervorrichtung im Querschnitt,
- Figur 2: einen Ausschnitt der Positioniervorrichtung nach Figur 1 mit eingelegtem Deckglas im Querschnitt,
- Figur 3: einen Ausschnitt der Positioniervorrichtung nach Figur 1 mit eingelegtem Deckglas und Bondingrahmen im Querschnitt,
- Figur 4: einen Ausschnitt der Positioniervorrichtung nach Figur 1 mit eingelegtem Deckglas und Bondingrahmen sowie erstem Kleber im Querschnitt,
- Figur 5: einen Ausschnitt der Positioniervorrichtung nach Figur 1 mit eingelegtem Deckglas und Bondingrahmen sowie erstem Kleber und eingebrachter Bondingmasse im Querschnitt,
- Figur 6: einen Ausschnitt der Positioniervorrichtung nach Figur 1 mit eingelegtem Deckglas, Bondingrahmen, Flüssigkristallanzeige und Displaymodul sowie erstem Kleber und eingebrachter Bondingmasse im Querschnitt,
- Figur 7: einen Ausschnitt der Positioniervorrichtung nach Figur 1 mit eingelegtem Deckglas, Bondingrahmen, Flüssigkristallanzeige und Displaymodul sowie erstem und zweitem Kleber und eingebrachter Bondingmasse im Querschnitt,
- Figur 8: einen Ausschnitt einer in eine Ausnehmung einer Anzeigenblende eingesetzten Anzeigeeinheit im Querschnitt.

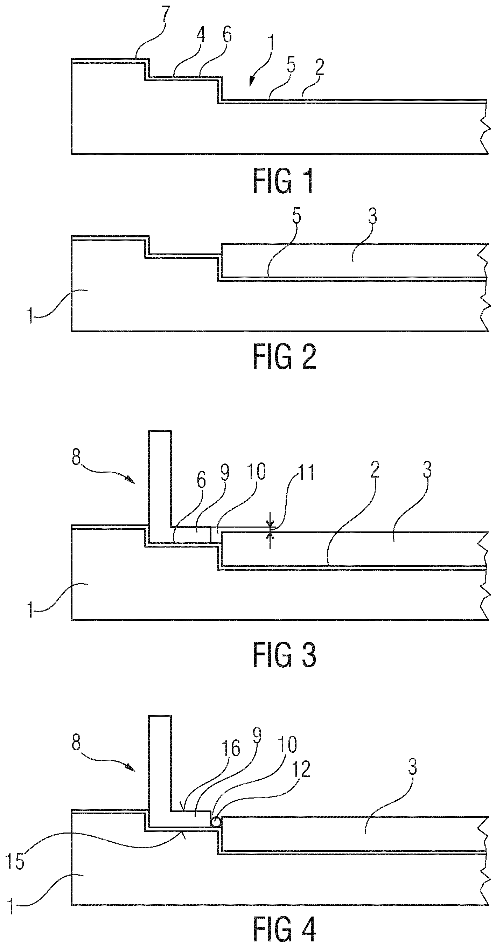

Die in Figur 1 dargestellte Positioniervorrichtung 1 weist eine tieferliegende erste Stufenausnehmung 2 auf, die in ihrer Umlaufkontur einem einzulegenden Deckglas 3 entspricht und zu einer Seite hin offen ist. Öffnungsseitig der ersten Stufenausnehmung 2 ist eine zweite Stufenausnehmung 4 in der Positioniervorrichtung 1 ausgebildet, deren flächige Erstreckung größer ist, als die der ersten Stufenausnehmung 2, so dass durch die erste Stufenausnehmung 2 umlaufend ein Absatz zur ersten Stufenausnehmung 2 gebildet ist.

Der Boden der ersten Stufenausnehmung 2 bildet eine erste Auflagefläche 5 und der Boden der zweiten Stufenausnehmung 4 bildet eine zur ersten Auflagefläche 5 parallele zweite Auflagefläche 6.

Die Wände der ersten und zweiten Stufenausnehmungen 2 und 4 sind mit einer Antihaftbeschichtung 7 versehen.

In Figur 2 ist das aus einem geringreflektiven Glas bestehende Deckglas 3, das frontseitig eine antiglare-antireflective Beschichtung aufweist, eingelegt.

Anschließend wurde, wie Figur 3 zeigt, in die zweite Stufenausnehmung 4 ein L-förmiger Bondingrahmen 8 eingelegt, der mit der Außenseite 15 seines parallel zur Ebene des Deckglases 3 sich erstreckenden, einen Schenkel 9 bildenden ersten Abschnitts auf der ersten Auflagefläche 5 aufliegt und mit seinem freien Ende zum Deckglas gerichtet ist. Dabei verbleibt ein Abstand zwischen der Stirnseite am freien Ende der Schenkels 9 und der radial umlaufenden Stirnseite des Deckglases 3, der eine Nut 10 bildet.

Die zur Außenseite 15 des Schenkels 9 parallele Innenseite 16 des Schenkels 9 erstreckt sich in einer Ebene, die sich in einem bestimmten Abstand 11 parallel zur Ebene der beobachterabgewandten Seite des Deckglases 3 erstreckt.

In Figur 4 wurde die Nut 10 mit einem ersten Kleber 12 gefüllt und so das Deckglas 3 mit dem Bondingrahmen 8 verbunden.

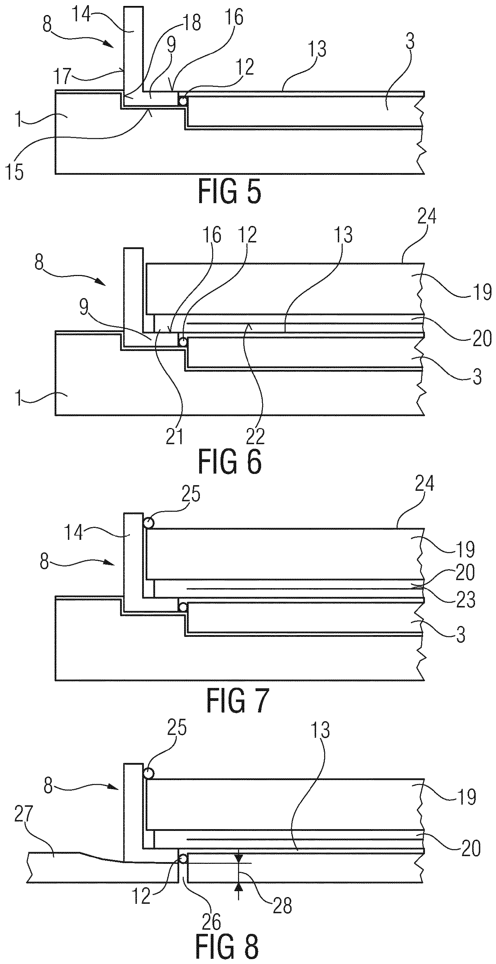

Wie Figur 5 zeigt, wurde anschließend die beobachterabgewandte Seite des Deckglases 3 derart mit einer Schicht definierten Volumens einer transparenten Bondingmasse 13 bedeckt, dass sich deren beobachterabgewandte Ebene in derselben Ebene wie die Innenseite 16 des Schenkels 9 erstreckt. Die Schicht der Bondingmasse 13 reicht über den ersten Kleber 12 hinaus bis zur freien Stirnseite des Schenkels 9.

Der zweite Abschnitt 14 des L-förmigen Bondingrahmens 8 erstreckt sich von der zweiten Auflagefläche 6 weg und ist mit seiner Außenseite 17 an der Seitenwand 18 der zweiten Stufenausnehmung 4 in Anlage.

In die durch den Bondingrahmen 8 gebildete Aufnahme wurde anschließend eine Baueinheit aus einer Flüssigkristallanzeige 20 und einem Displaymodul 19 eingesetzt. Wie Figur 7 zeigt, weist die Flüssigkristallanzeige 20 eine größere Erstreckung als das Deckglas 3 auf und liegt mit ihrem über das Deckglas 3 hinaus erstreckenden Bereich 21 ihrer Frontseite 22 auf der Innenseite 16 des Schenkels 9 auf. Ansonsten ist die Flüssigkristallanzeige mit ihrer durch ein Displayglas gebildeten Frontseite auf der Bondingmasse 13 in Anlage.

Deckglas, Bondingmasse 13 und das Displayglas der Flüssigkristallanzeige 20 weisen weitgehend sich entsprechende Brechungsindizes auf.

Die Erstreckung des Flächenbereichs des aktiv ansteuerbaren Bereichs 23 der Flüssigkristallanzeige 20 entspricht der Fläche des Deckglases 3 und ist mit diesem in paralleler Überdeckung.

Das Displaymodul 19 weist ein Gehäuse 24 auf und ist mittels eines zweiten Klebers 25 mit dem zweiten Abschnitt 14 des Bondingrahmens 8 verbunden worden (Figur 7), so dass nun die Anzeigeeinheit für den Einbau in eine Ausnehmung 26 einer Anzeigenblende 27 bereit ist.

In dem Gehäuse 24 des Displaymoduls 19 befinden sich eine Ansteuerelektronik zur Ansteuerung des aktiv ansteuerbaren Bereichs 23 der Flüssigkristallanzeige 20 sowie eine Beleuchtungseinheit zum Durchleuchten der Flüssigkristallanzeige 20.

Die Tiefe der ersten Stufenausnehmung 4 entspricht der Dicke der Anzeigenblende 27 in ihrem die Ausnehmung 26 umschließenden Bereich. Dadurch entspricht auch der Abstand 28 zwischen der Ebene der Außenseite 15 des Schenkels 9 und der beobachterseitigen Fläche des Deckglases 3 der Dicke der Anzeigenblende 27 in ihrem die Ausnehmung 26 umschließenden Bereich, so dass die Ebene der beobachterseitigen Fläche des Deckglases 3 sich in derselben Ebene wie die beobachterseitige Fläche der Anzeigenblende 27 erstreckt.

## Patentansprüche

1. Verfahren zur Herstellung einer Anzeigeeinheit, die eine einen flächigen aktiv ansteuerbaren Bereich (23) besitzende elektrooptische Anzeige mit einem beobachterseitig davor angeordneten Deckglas (3) aufweist, wobei zwischen der elektrooptische Anzeige und dem Deckglas (3) eine Schicht transparenter Bondingmasse (13) angeordnet ist und wobei das Deckglas (3) durch Klebverbindungen mittels eines Bondingrahmens (8) mit der elektrooptischen Anzeige zu einer Baueinheit verbunden ist, die in eine Ausnehmung (26) einer Anzeigenblende (27) derart eingesetzt ist, dass die beobachterseitigen Flächen von Deckglas (3) und Anzeigenblende (27) in einer Ebene liegen, **dadurch gekennzeichnet,**
**dass** das Deckglas (3) in eine erste Aufnahme einer Positioniervorrichtung (1) bis zur Auflage an einer zur Ebene des Deckglases (3) parallelen ersten Auflagefläche (5) eingelegt wird,
**dass** danach der Bondingrahmen (8) in eine zweite Aufnahme der Positioniervorrichtung (1) bis zur Auflage an einer zur Ebene der ersten Auflagefläche (5) parallelen zweiten Auflagefläche (6) eingelegt wird, wobei der Abstand (28) der Ebenen der ersten und zweiten Auflagefläche (5, 6) zueinander der Dicke der Anzeigeblende (27) in deren die Ausnehmung (26) umschließenden Bereich entspricht,
**dass** der Bondingrahmen (8) einen zum Deckglas (3) parallelen Schenkel (9) aufweist, dessen zum Deckglas (3) gerichteter umlaufender Rand den umlaufenden Rand des Deckglases (3) mit einem eine Nut (10) bildenden Abstand umschließt, wobei der Schenkel (9) auf seiner der Beobachterseite abgewandten Seite eine zur Ebene des Deckglases (3) parallele dritte Auflagefläche (16) aufweist, deren Ebene sich in einem bestimmten Abstand (11) parallel zu der beobachterabgewandten Fläche des Deckglases (3) erstreckt,
**dass** danach die Nut (10) zwischen Deckglas (3) und Schenkel (9) des Bondingrahmens (8) mit einem diese beiden Teile miteinander verbindenden ersten Kleber (12) gefüllt wird,
**dass** danach die beobachterabgewandte Fläche des Deckglases (3) mit der Schicht transparenter Bondingmasse (13) bedeckt wird, die sich bis zu der dem Deckglas (3) zugewandten Stirnseite des Schenkels (9) erstreckt und deren beobachterabgewandte Seite einer Ebene mit der dritten Auflagefläche (16) des Schenkels (9) bildet,
**dass** danach die elektrooptische Anzeige mit ihrer Beobachterseite auf die Bondingmasse (13) aufgelegt wird, so dass die elektrooptische Anzeige mit ihrem umlaufenden, sich über das Deckglas (3) hinaus erstreckenden Randbereich mit der dritten Auflagefläche (16) des Schenkels (9) in Auflage ist,
**dass** danach ein zweiter Kleber (25) direkt oder indirekt die elektrooptische Anzeige mit dem Bondingrahmen (8) verbindend zwischen den umlaufenden Randbereich der elektrooptische Anzeige und den Bondingrahmen (8) eingebracht wird und
**dass** danach die aus Deckglas (3), elektrooptischer Anzeige und Bondingrahmen (8) bestehende Baueinheit von der einem Beobachter abgewandten Seite her bis zur Anlage des Bondingrahmens (8) an der Anzeigenblende (27) gebracht und mit dieser verbunden wird, wobei das Deckglas (3) in die Ausnehmung (26) der Anzeigenblende (27) eingetaucht ist.

2. Verfahren nach Anspruch 1, **dadurch gekennzeichnet, dass** auf der einem Beobachter abgewandten Seite der elektrooptischen Anzeige eine eine Ansteuerelektronik und/oder eine Beleuchtungseinheit aufweisende Einheit (19) angeordnet ist.

3. Verfahren nach Anspruch 2, **dadurch gekennzeichnet, dass** der zweite Kleber (25) die mit der elektrooptischen Anzeige fest verbundene Einheit (19) mit dem Bondingrahmen (8) verbindend zwischen den umlaufenden Randbereich der Einheit (19) und den Bondingrahmen eingebracht wird.

4. Anzeigeeinheit, die eine einen flächigen aktiv ansteuerbaren Bereich (23) besitzende elektrooptische Anzeige mit einem beobachterseitig davor angeordneten Deckglas (3) aufweist, wobei zwischen der elektrooptischen Anzeige und dem Deckglas (3) eine Schicht transparenter Bondingmasse (13) angeordnet ist und wobei das Deckglas (3) durch Klebverbindungen mittels eines Bondingrahmens (8) mit der elektrooptische Anzeige zu einer Baueinheit verbunden ist, die in eine Ausnehmung (26) einer Anzeigenblende (27) derart eingesetzt ist, dass die beobachterseitigen Flächen von Deckglas (3) und Anzeigenblende (27) in einer Ebene liegen, **dadurch gekennzeichnet, dass** zwischen der einem Beobachter abgewandten Seite des Deckglases (3) und der Frontseite der elektrooptischen Anzeige ein von der transparenten Bondingmasse (13) gefüllter Spalt vorhanden ist, wobei ein sich über die Ebene des Deckglases (3) radial hinaus erstreckender Bereich (21) der elektrooptischen Anzeige mit seiner Frontseite an einer dritten Auflagefläche (16) eines zum Deckglas (3) parallelen Schenkels (9) eines Bondingrahmens (8) in Auflage ist, wobei die dritte Auflagefläche (16) die beobachterferne Seite des Schenkels (9) ist und die beobachterseitige Seite des Schenkels (9) sich in einem Abstand (28) parallel zur Frontseite des Deckglases (3) erstreckt, der der Dicke der Anzeigeblende (27) in deren die Ausnehmung (26) umschließenden Bereich entspricht, mit einem eine Nut (10) bildenden Abstand zwischen den einander gegenüberliegenden radial umlaufenden Seiten von Schenkel (9) und Deckglas (3), in die ein das Deckglas (3) und den Bondingrahmen (8) verbindender erster Kleber (12) eingebracht ist, mit einem zweiten Kleber (25), der zwischen dem radial umlaufenden Rand der elektrooptischen Anzeige oder dem radial umlaufenden Rand einer mit der elektrooptischen Anzeige fest verbundenen Einheit (19) und einem die elektrooptische Anzeige oder die damit fest verbundene Einheit (19) umschließenden Bereich des Bondingrahmens (8) eingebracht ist.

5. Anzeigeeinheit nach Anspruch 4, **dadurch gekennzeichnet, dass** der Bondingrahmen (8) einen L-förmigen Querschnitt aufweist, dessen parallel zum Deckglas (3) gerichteter erster Abschnitt den Schenkel (9) des Bondingrahmens (8) bildet und dessen zweiter Abschnitt (14) von der Anzeigenblende (27) weggerichtet ist, wobei der zweite Kleber (25) zwischen dem radial umlaufenden Rand der elektrooptischen Anzeige oder dem radial umlaufenden Rand einer mit der elektrooptischen Anzeige fest verbundenen Einheit (19) und dem zweiten Abschnitt (14) des L-förmigen Bondingrahmens (8) eingebracht ist.

6. Anzeigeeinheit nach einem der Ansprüche 4 und 5, **dadurch gekennzeichnet, dass** die Bondingmasse (13) einen Brechungsindex aufweist, der den Brechungsindizes des Deckglases (3) und dem frontseitigen Substrat der elektrooptischen Anzeige zumindest annähernd entspricht.

7. Anzeigeeinheit nach einem der Ansprüche 4 bis 6, **dadurch gekennzeichnet, dass** das Deckglas (3) aus einem geringreflektiven Material besteht.

8. Anzeigeeinheit nach Anspruch 7, **dadurch gekennzeichnet, dass** das Deckglas (3) frontseitig eine antiglare-antireflective Beschichtung aufweist.

9. Anzeigeeinheit nach einem der Ansprüche 4 bis 8, **dadurch gekennzeichnet, dass** die Einheit (19) eine Ansteuerelektronik und/oder eine Beleuchtungseinheit aufweist.

10. Anzeigeeinheit nach Anspruch 9, **dadurch gekennzeichnet, dass** die Einheit (19) ein Gehäuse (24) aufweist.

11. Anzeigeeinheit nach einem der Ansprüche 4 bis 9, **dadurch gekennzeichnet, dass** der aktiv ansteuerbare Bereich (23) der elektrooptischen Anzeige sich über einen Flächenbereich erstreckt, der kleiner oder gleich der Flächenerstreckung des Deckglases (3) ist.

## Claims

1. Method for producing a display unit which comprises an electro-optical display having a sheet-like actively controllable region (23) and a covering glass (3) arranged in front on the observer side, a layer of transparent bonding mass (13) being arranged between the electro-optical display and the covering glass (3) and the covering glass (3) being connected to the electro-optical display by adhesive connections by means of a bonding frame (8) to form a structural unit, which is inserted in a recess (26) of a display panel (27) in such a way that the surfaces on the observer side of the covering glass (3) and the display panel (27) lie in one plane, **characterized in that** the covering glass (3) is placed into a first receptacle of a positioning device (1) until it lies on a first contact surface (5) parallel to the plane of the covering glass (3),
**in that** thereafter the bonding frame (8) is placed into a second receptacle of the positioning device (1) until it lies on a second contact surface (6) parallel to the plane of the first contact surface (5), the distance (28) of the planes of the first and second contact surfaces (5, 6) from one another corresponding to the thickness of the display panel (27) in its region enclosing the recess (26),
**in that** the bonding frame (8) has a leg (9) which is parallel to the covering glass (3) and the peripheral edge of which, directed toward the covering glass (3), encloses the peripheral edge of the covering glass (3) at a distance forming a groove (10), the leg (9) having on its side facing away from the observer side a third contact surface (16), which is parallel to the plane of the covering glass (3) and the plane of which extends parallel to and at a certain distance (11) from the surface of the covering glass (3) that is facing away from an observer,
**in that** thereafter the groove (10) between the covering glass (3) and the leg (9) of the bonding frame (8) is filled with a first adhesive (12), connecting these two parts to one another,
**in that** thereafter the surface of the covering glass (3) that is facing away from an observer is covered with the layer of transparent bonding mass (13), which extends up to the end face of the leg (9) that is facing the covering glass (3) and the side of which that is facing away from an observer forms a plane with the third contact surface (16) of the leg (9),
**in that** thereafter the electro-optical display is placed with its observer side onto the bonding mass (13), so that, with its peripheral edge region that extends beyond the covering glass (3), the electro-optical display bears against the third contact surface (16) of the leg (9),
**in that** thereafter a second adhesive (25) is introduced between the peripheral edge region of the electro-optical display and the bonding frame (8), connecting the electro-optical display directly or indirectly to the bonding frame (8), and
**in that** thereafter the structural unit consisting of the covering glass (3), the electro-optical display and the bonding frame (8) is brought up to the display panel from the side that is facing away from an observer until the bonding frame (8) comes to lie against the display panel (27) and is connected to the latter, the covering glass (3) entering the recess (26) of the display panel (27).

2. Method according to Claim 1, **characterized in that**, on the side of the electro-optical display that is facing away from an observer, a unit (19) comprising control electronics and/or a lighting unit is arranged.

3. Method according to Claim 2, **characterized in that** the second adhesive (25) is introduced between the peripheral edge region of the unit (19) that connects the unit (19) securely connected to the electro-optical display to the bonding frame (8) and the bonding frame.

4. Display unit, which comprises an electro-optical display having a sheet-like actively controllable region (23) and a covering glass (3) arranged in front on the observer side, a layer of transparent bonding mass (13) being arranged between the electro-optical display and the covering glass (3) and the covering glass (3) being connected to the electro-optical display by adhesive connections by means of a bonding frame (8) to form a structural unit, which is inserted in a recess (26) of a display panel (27) in such a way that the surfaces on the observer side of the covering glass (3) and the display panel (27) lie in one plane, **characterized in that** between the side of the covering glass (3) that is facing away from an observer and the front side of the electro-optical display there is a gap filled by the transparent bonding mass (13), a region (21) of the electro-optical display that extends radially beyond the plane of the covering glass (3) lying with its front side on a third contact surface (16) of a leg (9) of a bonding frame (8) that is parallel to the covering glass (3), the third contact surface (16) being the side of the leg (9) that is remote from an observer and the side of the leg (9) that is toward an observer extending parallel to the front side of the covering glass (3) and at a distance (28) from it that corresponds to the thickness of the display panel (27) in its region surrounding the recess (26), with a distance between the mutually opposing radially peripheral sides of the leg (9) and the covering glass (3), forming a groove (10), into which there has been introduced a first adhesive (12), connecting the covering glass (3) and the bonding frame (8), with a second adhesive (25), which has been introduced between the radially peripheral edge of the electro-optical display, or the radially peripheral edge of a unit (19) securely connected to the electro-optical display, and a region of the bonding frame (8) that encloses the electro-optical display or the unit (19) securely connected to it.

5. Display unit according to Claim 4, **characterized in that** the bonding frame (8) has an L-shaped cross section, the first portion of which, directed parallel to the covering glass (3) forms the leg (9) of the bonding frame (8) and the second portion (14) of which is directed away from the display panel (27), the second adhesive (25) having been introduced between the radially peripheral edge of the electro-optical display or the radially peripheral edge of a unit (19) securely connected to the electro-optical display and the second portion (14) of the L-shaped bonding frame (8).

6. Display unit according to either of Claims 4 and 5, **characterized in that** the bonding mass (13) has a refractive index that corresponds at least approximately to the refractive indices of the covering glass (3) and the substrate on the front side of the electro-optical display.

7. Display unit according to one of Claims 4 to 6, **characterized in that** the covering glass (3) consists of a material of low reflection.

8. Display unit according to Claim 7, **characterized in that** the covering glass (3) has an antiglare-antireflective coating on the front side.

9. Display unit according to one of Claims 4 to 8, **characterized in that** the unit (19) has control electronics and/or a lighting unit.

10. Display unit according to Claim 9, **characterized in that** the unit (19) has a housing (24).

11. Display unit according to one of Claims 4 to 9, **characterized in that** the actively controllable region (23) of the electro-optical display extends over an area region that is less than or equal to the areal extent of the covering glass (3).

## Revendications

1. Procédé destiné à la fabrication d'une unité d'affichage, laquelle présente un affichage électro-optique qui possède une zone (23) plane pouvant être commandée de manière active et qui comprend une vitre de recouvrement (3) disposée devant celui-ci, du côté de l'observateur ;
selon lequel une couche de masse de liaison (13) transparente est disposée entre l'affichage électro-optique et la vitre de recouvrement (3) ; et
selon lequel la vitre de recouvrement (3) est reliée à l'affichage électro-optique au moyen d'un cadre de liaison (8), par l'intermédiaire de liaisons par encollage, en vue de former un module de structure, lequel est mis en place dans un évidement (26) d'un cadre d'affichage (27), de telle sorte que les surfaces de la vitre de recouvrement (3) et du cadre d'affichage (27) qui sont situées du côté de l'observateur figurent dans un plan ; **caractérisé en ce que**
la vitre de recouvrement (3) est insérée dans un premier logement d'un dispositif de positionnement (1) jusqu'à venir en appui sur une première surface de soutien (5), laquelle est parallèle au plan de la vitre de recouvrement (3) ;
**caractérisé en ce que**
le cadre de liaison (8) est ensuite inséré dans un deuxième logement du dispositif de positionnement (1) jusqu'à venir en appui sur une deuxième surface de soutien (6), laquelle est parallèle au plan de la première surface de soutien (5) ;
selon lequel la distance (28) des plans formés par la première et la deuxième surface de soutien (5, 6), l'une par rapport à l'autre, correspond à l'épaisseur du cadre d'affichage (27), dans sa zone qui entoure l'évidement (26) ;
**caractérisé en ce que**
le cadre de liaison (8) présente une branche (9) qui est parallèle à la vitre de recouvrement (3) et dont la bordure périphérique, laquelle est orientée en direction de la vitre de recouvrement (3), entoure la bordure périphérique de la vitre de recouvrement (3), avec un écartement formant une rainure (10) ;
selon lequel la branche (9) présente, sur sa face qui se trouve à l'opposé de celle située du côté de l'observateur, une troisième surface de soutien (16), laquelle est parallèle au plan de la vitre de recouvrement (3) et dont le plan s'étend sur une certaine distance (11), parallèlement à la surface de la vitre de recouvrement (3) qui se trouve à l'opposé du côté de l'observateur ; **caractérisé en ce que**
la rainure (10) située entre la vitre de recouvrement (3) et la branche (9) du cadre de liaison (8) est ensuite remplie avec un premier agent adhésif (12) qui relie ces deux parties l'une à l'autre ;
**caractérisé en ce que**
la surface de la vitre de recouvrement (3) qui se trouve à l'opposé du côté de l'observateur est ensuite recouverte avec la couche de la masse de liaison (13) transparente, laquelle s'étend jusqu'à la face frontale de la branche (9) qui est orientée vers la vitre de recouvrement (3) et dont la face qui se trouve à l'opposé du côté de l'observateur forme un plan avec la troisième surface de soutien (16) de la branche (9) ;
**caractérisé en ce que**
l'affichage électro-optique est ensuite mis en place, avec sa face qui se trouve du côté de l'observateur, sur la masse de liaison (13) de telle sorte que l'affichage électro-optique, avec sa zone de bordure périphérique qui s'étend au-delà de la vitre de recouvrement (3), se trouve en appui sur la troisième surface de soutien (16) de la branche (9) ; **caractérisé en ce que**
un deuxième agent adhésif (25), lequel établit directement ou indirectement la liaison de l'affichage électro-optique avec le cadre de liaison (8), est ensuite appliqué entre la zone périphérique de la bordure de l'affichage électro-optique et le cadre de liaison (8) ; et
**caractérisé en ce que**
le module de structure, lequel est constitué de la vitre de recouvrement (3), de l'affichage électro-optique et du cadre de liaison (8) est ensuite mis en place par la face qui se trouve à l'opposé du côté d'un observateur, jusqu'à ce que le cadre de liaison (8) vienne se mettre en appui sur le cadre d'affichage (27) et soit relié avec ce dernier ;
selon lequel la vitre de recouvrement (3) est plongée dans l'évidement (26) du cadre d'affichage (27).

2. Procédé selon la revendication 1, **caractérisé en ce que**, sur la face de l'affichage électro-optique qui se trouve à l'opposé du côté de l'observateur, une unité est disposée (19) qui présente un système de pilotage électronique et/ou une unité d'éclairage.

3. Procédé selon la revendication 2, **caractérisé en ce que** le deuxième agent adhésif (25), lequel établit la liaison de l'unité (19) avec le cadre de liaison (8), laquelle unité est reliée de manière fixe à l'affichage électro-optique, est mis en place entre la zone périphérique de la bordure de l'unité (19) et le cadre de liaison.

4. Unité d'affichage, laquelle présente un affichage électro-optique qui possède une zone (23) plane pouvant être commandée de manière active et qui comprend une vitre de recouvrement (3) disposée devant celui-ci, du côté de l'observateur ;
selon laquelle une couche de masse de liaison (13) transparente est disposée entre l'affichage électro-optique et la vitre de recouvrement (3) ; et
selon laquelle la vitre de recouvrement (3) est reliée à l'affichage électro-optique au moyen d'un cadre de liaison (8), par l'intermédiaire de liaisons par encollage, en vue de former un module de structure, lequel est mis en place dans un évidement (26) d'un cadre d'affichage (27), de telle sorte que les surfaces de la vitre de recouvrement (3) et du cadre d'affichage (27) qui sont situées du côté de l'observateur figurent dans un plan ; **caractérisée en ce que**
une fente, laquelle est remplie de la masse de liaison (13) transparente, est présente entre la face de la vitre de recouvrement (3) qui se trouve à l'opposé du côté d'un observateur et la face frontale de l'affichage électro-optique ;
selon laquelle une zone (21) de l'affichage électro-optique, laquelle s'étend de manière radiale à travers le plan de la vitre de recouvrement (3), vient se mettre en appui avec sa face frontale sur une troisième surface de soutien (16) d'une branche (9) d'un cadre de liaison (8), laquelle est parallèle à la vitre de recouvrement (3) ; selon laquelle la troisième surface de soutien (16) est la face de la branche (9) qui se trouve de l'autre côté de l'observateur et la face de la branche (9) qui se trouve du côté de l'observateur s'étend sur une certaine distance (28), parallèlement à la face frontale de la vitre de recouvrement (3), laquelle distance correspond à l'épaisseur du cadre d'affichage (27) dans sa zone qui entoure l'évidement (26), avec un espacement qui forme une rainure (10) entre les faces périphériques de la branche (9) et de la vitre de recouvrement (3), lesquelles sont positionnées de manière radiale à l'opposé l'une de l'autre, rainure dans laquelle est appliqué un premier agent adhésif (12) qui relie ensemble la vitre de recouvrement (3) et le cadre de liaison (8), avec un deuxième agent adhésif (25), lequel est appliqué entre la bordure qui s'étend de manière radiale sur la périphérie de l'affichage électro-optique, ou entre la bordure qui s'étend de manière radiale sur la périphérie d'une unité (19) qui est reliée de manière fixe à l'affichage électro-optique, et une zone du cadre de liaison (8), laquelle entoure l'affichage électro-optique ou l'unité (19) qui est reliée de manière fixe à l'affichage électro-optique.

5. Unité d'affichage selon la revendication 4, **caractérisée en ce que** le cadre de liaison (8) présente une section transversale en forme de « L », dont la première section qui est alignée parallèlement à la vitre de recouvrement (3) forme la branche (9) du cadre de liaison (8) et dont la deuxième section (14) est orientée de manière à s'éloigner du cadre d'affichage (27) ;
selon laquelle le deuxième agent adhésif (25) est appliqué entre la bordure qui entoure de manière radiale la périphérie de l'affichage électro-optique, ou entre la bordure qui entoure de manière radiale la périphérie d'une unité (19) qui est reliée de manière fixe à l'affichage électro-optique, et la deuxième section (14) du cadre de liaison (8) en forme de « L ».

6. Unité d'affichage selon l'une des revendications 4 et 5, **caractérisée en ce que** la masse de liaison (13) présente un indice de réfraction, lequel correspond, tout au moins approximativement, à l'indice de réfraction de la vitre de recouvrement (3) et du substrat de l'affichage électro-optique qui se trouve du côté de la face frontale.

7. Unité d'affichage selon l'une des revendications 4 à 6, **caractérisée en ce que** la vitre de recouvrement (3) est constituée d'un matériau faiblement réfléchissant.

8. Unité d'affichage selon la revendication 7, **caractérisée en ce que** la vitre de recouvrement (3) présente, du côté de sa face frontale, un revêtement antiéblouissant et antiréfléchissant.

9. Unité d'affichage selon l'une des revendications 4 à 8, **caractérisée en ce que** l'unité (19) présente un système de pilotage électronique et/ou une unité d'éclairage.

10. Unité d'affichage selon la revendication 9, **caractérisée en ce que** l'unité (19) présente un boîtier (24).

11. Unité d'affichage selon l'une des revendications 4 à 9, **caractérisée en ce que** la zone (23) de l'affichage électro-optique, laquelle peut être commandée de manière active, s'étend sur une zone de surface qui est inférieure ou égale à l'étendue de la surface de la vitre de recouvrement (3).
